(19) Europäisches Patentamt
European Patent Office
Office européen des brevets

(11) Veröffentlichungsnummer: **0 259 644 B1**

(12) # EUROPÄISCHE PATENTSCHRIFT

(45) Veröffentlichungstag der Patentschrift: **04.12.91**

(51) Int. Cl.5: **C04B 41/48**, C08G 18/10, C08G 18/30, C08G 18/61, C04B 41/49

(21) Anmeldenummer: **87111797.4**

(22) Anmeldetag: **14.08.87**

(54) **Imprägniermittel und seine Verwendung.**

(30) Priorität: **27.08.86 DE 3629061**

(43) Veröffentlichungstag der Anmeldung:
**16.03.88 Patentblatt 88/11**

(45) Bekanntmachung des Hinweises auf die Patenterteilung:
**04.12.91 Patentblatt 91/49**

(84) Benannte Vertragsstaaten:
**BE DE FR GB IT NL**

(56) Entgegenhaltungen:
**DE-A- 2 713 857**
**US-A- 4 413 102**
**US-A- 4 520 144**

(73) Patentinhaber: **BAYER AG**
**W-5090 Leverkusen 1 Bayerwerk(DE)**

(72) Erfinder: **Jansen, Bernhard, Dr.**
**Roggendorfstrasse 65**
**W-5000 Köln 80(DE)**
Erfinder: **Müller, Hanns Peter, Dr.**
**Im Kerberich 6**
**W-5068 Odenthal(DE)**
Erfinder: **Richter, Roland, Dr.**
**Roggendorfstrasse 53**
**W-5000 Köln 80(DE)**
Erfinder: **Schäpel, Dietmar, Dr.**
**Johanniterstrasse 15**
**W-5000 Köln 80(DE)**
Erfinder: **Schmidt, Rudolf, Dipl.-Ing.**
**Am Jungholzkamp 22**
**W-5093 Burscheid(DE)**

**EP 0 259 644 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft die Verwendung eines neuen Imprägniermittels auf Basis von NCO-Prepolymeren oder von NCO-Semiprepolymeren aus aliphatischen bzw. cycloaliphatischen Polyisocyanaten und unterschüssigen Mengen an alkoholische Hydroxylgruppen aufweisenden Polysiloxanen zur Imprägnierung mineralischer Substrate.

Der Einsatz von Polymerzubereitungen zur Imprägnierung von mineralischen Substraten, beispielsweise zur Betonbehandlung ist bereits seit langem bekannt. Insbesondere die Anwendung von Epoxidharzen als Beschichtungsmaterial zur Verhinderung des Zutritts saurer Schadgase wie $CO_2$ und $SO_2$, außerdem $Cl^{\ominus}$-Ionen, sowie die Verwendung von Epoxidharzen für Reparaturen und Sanierung geschädigter Betonbauwerke wird durch K. Sellars in einem Übersichtsartikel (Paint & Resin, Oct. 1984, pp. 33-37) beschrieben. Auch auf Epoxidharzbasis beruht die Anwendung von Harzemulsionen in Spezialmörteln zur Betonsanierung in EP-A-0 147 553 und EP-A-0 147 554.

Die hier beschriebenen Verfahrensweisen zeichnen sich dadurch aus, daß der zu behandelnde Beton praktisch durch eine Beschichtung geschützt wird, die außen auf dem Beton aufliegt. Diese dichte Schicht weist aber den Nachteil auf, daß dem Beton keinerlei Feuchtigkeitsaustausch mit der Umgebung ermöglicht ist. Das ist besonders bei hinterlüfteten Betonstrukturen (Wohngebäude, etc.) problematisch, denn der Beton kann nicht "atmen". Eine Beschichtung ist aber außerdem noch von Nachteil, weil diese bei unzureichender Haftung abblättern bzw. bei Beschädigung verletzt werden kann.

Diesen Nachteilen der Beschichtungsverfahren sucht man durch Imprägnierung des Betons zu entgehen. Gemäß DE-OS 1 917 200 werden Betonteile mit Zubereitungen auf Siliconharzbasis getränkt, nachdem eine Wasserdampfbehandlung erfolgte. Die DE-OS 2 053 110 beschreibt die Betonimprägnierung mit Hilfe von siliciumorganischen Verbindungen nach einer hydromechanischen Reinigung der zu behandelnden Oberfläche. Die Imrägnierung nach diesen Verfahren ist belastet durch die Vorbehandlung der zu imprägnierenden Flächen, die sowohl kostenintensiv als auch je nach Bauwerk mehr oder weniger aufwendig sein kann.

Die DD-PS 206 984, DE-OS 2 505 286 und DE-OS 2 438 468 beschreiben die Verwendung von organischen Lösungen von ortho-Kieselsäureestern und bestimmten Alkoxysilylverbindungen als Imrägniermittel.

Gemäß US-PS 3 852 100 werden Mischungen aus Toluylendiisocanat, Kaliumcyanid, Dimethylformamid und Methanol in wäßriger Suspension zur Beschichtung von Betonelementen verwendet. Die DE-OS 3 135 941 beschreibt schließlich die Beschichtung von Beton mit nicht näher beschriebenen Polyisocyanatzubereitungen insbesondere auf Basis von MDI.

Die bekannten Verfahren zur Betonbehandlung können jedoch die Anforderung der Praxis an ein wirksames Imprägniermittel zur Imprägnierung von mineralischen Substraten nicht voll befriedigen, da entweder die imprägnierende Wirkung unzureichend ist oder es sich bei den beschriebenen Mitteln um Beschichtungsmittel handelt, die aufgrund der Filmbildung auf der Oberfläche der Substrate ein "Atmen" des Substrats verhindern.

Es war die der Erfindung zugrundeliegende Aufgabe, ein Imprägniermittel für mineralische Substrate, insbesondere für Beton oder Naturstein zur Verfügung zu stellen, welches insbesondere die folgenden Vorteile in sich vereinigt:

1. Die Imprägnierung der Substrate soll eine weitgehende Diffusionsbremse für Kohlendioxid bewirken, wobei eine zumindest geringfügige Wacherdampfdiffusion beibehalten werden muß, und wobei die matte Oberfläche des Substrats bezüglich Struktur und Farbe erhalten werden soll.

2. Die Imprägnierung soll alkalibeständig, hydrophob, temperaturstabil innerhalb des Bereichs von -40 bis +60°C, nicht auswaschbar und UV-beständig sein; das Imprägniermittel muß bis zu einer Tiefe von 3-5 mm in das Substrat eindringen; die Kapillarwände im Inneren des Substrats müssen mit einem gut haftenden Film überzogen und Mikroporen verschlossen werden.

3. Das Imprägniermittel sollte möglichst mit Wasser mischbar sein, eine hohe Kapillaraktivität bei gleichzeitig niedriger Viskosität aufweisen, physiologisch weitgehend unbedenklich sein und eine Topfzeit im offenen Gebinde von mindestens 30 Minuten aufweisen.

Diese Aufgabe konnte durch die nachstehend näher beschriebene erfindungsgemäße Verwendung eines neuartigen Imprägniermittels gelöst werden.

Gegenstand der Erfindung ist die

Verwendung von Imprägniermitteln, bestehend im wesentlichen aus

a) einem unter dem Einfluß von Luftfeuchtigkeit aushärtbaren NCO-Prepolymeren oder NCO-Semiprepolymeren mit einem NCO-Gehalt von 2 - 25 Gew.-%, auf Basis von

a1) organischen Polyisocyanaten

und

a2) Verbindungen mit mindestens zwei alkoholischen Hydroxylgruppen,

b) einem gegenüber Isocyanatgruppen inerten Lösungsmittel und gegebenenfalls

c) Hilfs- und Zusatzmitteln,

zur Imprägnierung von mineralischen Substraten,

wobei es sich bei den organischen Polyisocyanaten a1) um solche mit ausschließlich aliphatisch oder cycloaliphatisch gebundenen Isocyanatgruppen und bei den Polyhydroxylverbindungen a2) um mindestens zwei alkoholisch gebundene Hydroxylgruppen aufweisende Polysiloxane des Molekulargewichtsbereichs 300 - 5.000 handelt.

Bei der wesentlichen Komponente a) der erfindungsgemäß zu verwendenden Imprägniermittel handelt es um NCO-Prepolymere oder

um NCO-Semiprepolymere mit einem NCO-Gehalt von 2 - 25. vorzugsweise 2,5 - 20, insbesondere von 3 - 10 Gew.-%. Unter "NCO-Prepolymeren" sind hierbei weitgehend Monomeren-freie Umsetzungsprodukte von organischen Polyisocyanaten mit unterschüssigen Mengen an organischen Polyhydroxylverbindungen zu verstehen. Die Monomeren-Freiheit wird entweder durch Verwendung eines nur geringfügigen NCO-Überschusses (NCO/OH-Äquivalentverhältnis >1:1 und <2:1) oder durch Verwendung eines hohen NCO-Überschusses (NCO/OH-Äquivalentverhältnis >2:1) und anschließende destillative Entfernung des nicht umgesetzten NCO-Überschusses sichergestellt. Unter "NCO-Semiprepolymeren" sind Gemische von derartigen NCO-Prepolymeren mit nicht umgesetztem, monomerem Ausgangspolyisocyanat zu verstehen.

Die Komponente a) wird durch Umsetzung von a1) organischen Polyisocyanaten mit ausschließlich aliphatisch oder cycloaliphatisch gebundenen Isocyanatgruppen mit a2) unterschüssigen Mengen an Polysiloxanen mit mindestens zwei alkoholisch gebundenen Hydroxylgruppen hergestellt.

Geeignete Ausgangspolyisocyanate a1) sind sowohl niedermolekulare Polyisocyanate mit einem unter 400 liegenden Molekulargewicht als auch Modifizierungsprodukte derartiger niedermolekularer Polyisocyanate. Geeignete niedermolekulare Polyisocyanate sind beispielsweise solche der Formel

$Q(NCO)_n$

in der

n = 2 bis 4, vorzugsweise jedoch 2

und

Q einen aliphatischen Kohlenwasserstoffrest mit 2 bis 18, vorzugsweise 6 bis 10 C-Atomen, oder einen cycloaliphatischen Kohlenwasserstoffrest mit 4 bis 15, vorzugsweise 5 bis 10 C-Atomen

bedeuten.

Geeignete derartige niedermolekulare Polyisocyanate sind z.B. Hexamethylendiisocyanat, 1,12-Dodecandiisocyanat, Cyclobutan-1,3-diisocyanat, Cyclohexan-1,3- und 1,4-diisocyanat sowie beliebige Gemische dieser Isomeren, Isocyanato-3,3,5-trimethyl-5-isocyanatomethylcyclohexan und Perhydro-2,4'- und/oder -4,4'-diphenylmethan-diisocyanat.

Geeignete Modifizierungsprodukte sind nach an sich bekannten Verfahren des Standes der Technik aus oben beispielhaft genannten niedermolekularen Polyisocyanaten herstellbar und weisen z.B. Isocyanurat-, Biuret-, Allophanat-, Carbodiimid- oder Uretdion-Strukturelemente auf. Beliebige Gemische der genannten Polyisocyanate können ebenfalls eingesetzt werden.

Bei der Komponente a2) handelt es sich um beliebige Polysiloxane, welche mindestens zwei alkoholisch gebundene Hydroxylgruppen aufweisen. Besonders bevorzugt sind Polysiloxan-Diole der allgemeinen Formel

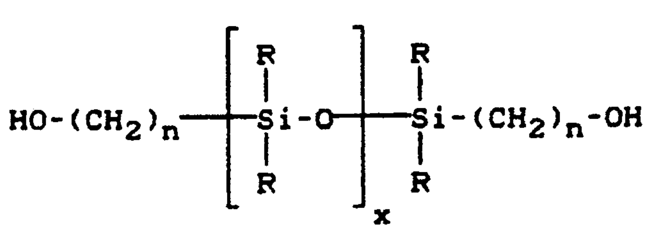

in welcher

R für einen Alkylrest mit 1 bis 6 Kohlenstoffatomen, vorzugsweise eine Methylgruppe steht,

n für eine ganze Zahl von 1 bis 6, vorzugsweise 1 steht und

x für eine ganze Zahl von 4 bis 50, vorzugsweise 5 bis 20 steht.

Die als Komponente a2) geeigneten Polysiloxane weisen das obengenannte Molekulargewicht auf. Vorzugsweise liegt das Molekulargewicht der Polysiloxane innerhalb des Bereichs von 400 bis 1500. Beliebige Gemische derartiger Polysiloxane können ebenfalls als Komponente a2) eingesetzt werden.

Die Herstellung der Prepolymeren bzw. Semiprepolymeren a) erfolgt durch an sich bekannte Umsetzung der Komponenten a1) und a2) unter Einhaltung eines NCO/OH-Äquivalentverhältnisses von 1,1:1 bis 20:1, vorzugsweise 1,5:1 bis 15:1 bei 20 - 100 °C, vorzugsweise 70 - 90 °C. Im Falle der Verwendung von leicht flüchtigen Ausgangsdiisocyanaten der oben beispielhaft genannten Art, empfiehlt sich oftmals eine destillative Entfernung des im Anschluß an die Umsetzung gegebenenfalls noch vorliegenden Überschusses an monomerem Ausgangsdiisocyanat. Eine derartige Nachbehandlung ist jedoch bei der Verwendung von modifizierten Ausgangspolyisocyanaten der oben beispielhaft genannten Art im allgemeinen nicht erforderlich,

In den erfindungsgemäß zu verwendenden Imprägniermitteln liegen die NCO-Prepolymeren bzw. -Semiprepolymeren in Lösung in einem geeigneten Lösungsmittel b) vor. Der Gehalt dieser Lösung an Prepolymeren bzw. Semiprepolymeren a) liegt im allgemeinen bei 5 - 50, vorzugsweise bei 7 - 30 und insbesondere bei 7 - 20 Gew.-%. Die Lösungsmittel müssen selbstverständlich gegenüber Isocyanatgruppen inert sein. Geeignete Lösungsmittel sind beispielsweise Toluol, Xylol, Ethylacetat, Butylacetat, Aceton, Methylethylketon, Methylisobutylketon, Ethylenglykol-monoethylether-acetat, Cyclohexan oder beliebige Gemische derartiger Lösungsmittel. Besonders gut geeignet sind (zwecks Gewährleistung der Wassermischbarkeit) hydrophile Lösungsmittel, beispielsweise Gemische aus Ketonen der genannten Art und gegebenenfalls Toluol. Als besondere Lösungsmittel können auch vorteilhaft Orthokieselsäurealkylester verwendet werden. Geeignete Orthokieselsäureester sind beispielsweise Kieselsäure-Tetramethylester oder Kieselsäure-Tetraethylester. Diese speziellen Lösungsmittel weisen die Doppelfunktion eines Lösungsmittels und eines reaktiven Verdünners auf. Die Kieselsäureester reagieren selbstverständlich bei der Einwirkung von Luftfeuchtigkeit unter Bildung von polymerer Kieselsäure, so daß bei Mitverwendung dieser Kieselsäureester der Härtungsmechanismus auf dieser Reaktion und gleichzeitig auf der bekannten Vernetzungsreaktion der NCO-Prepolymeren bzw. -Semiprepolymeren unter dem Einfluß von Luftfeuchtigkeit beruht.

Die Kieselsäureester können im Gemisch mit den genannten Lösungsmitteln oder auch als alleinige Lösungsmittel verwendet werden. Bei der Berechnung des Gehalts der Imprägniermittel an Prepolymeren oder Semiprepolymeren a) geht das Gewicht der gegebenenfalls als Lösungsmittel verwendeten Kieselsäureester in das Gewicht des Lösungsmittels ein.

Bei den gegebenenfalls in den erfindungsgemäßen Imprägniermitteln vorliegenden Hilfs- und Zusatzmitteln c) handelt es sich beispielsweise um cyclische Säureanhydride wie Maleinsäureanhydrid, Phthalsäureanhydrid oder Tetrahydrophthalsäureanhydrid, die den Imprägniermitteln oftmals dann einverleibt werden, wenn diese Kieselsäureester der zuletzt genannten Art enthalten. Diese Säureanhydride bewirken eine Beschleunigung der Reaktion der Kieselsäureester unter Bildung von polymerer Kieselsäure.

Weitere, gegebenenfalls mitzuverwendende Hilfs- und Zusatzmittel c) sind beispielsweise Katalysatoren, die die Isocyanat-Wasser-Reaktion beschleunigen. Gut geeignet sind beispielsweise die blockierten Amin- und Zinnkatalysatoren gemäß DE-OS 3 326 566. Diese Katalysatoren werden den Imprägniermitteln, fall überhaupt, in Mengen von bis zu 8, vorzugsweise bis zu 5 Gew.-% zugesetzt.

Weitere, gegebenenfalls mitzuverwendende Hilfs- und Zusatzmittel c) sind beispielsweise Stabilisatoren wie Benzoylchlorid, oberflächenaktive Substanzen oder Verlaufhilfsmittel der aus der Lacktechnologie an sich bekannten Art. Auch Pigmente und Füllstoffe können mitverwendet werden, jedoch ist dies weniger bevorzugt.

Die erfindungsgemäße Verwendung zur Imprägnierung von mineralischen Substraten, insbesondere von Beton oder Naturstein kann nach den üblichen Verfahren erfolgen. Beispielhaft genannt seien hier die Techniken des Spritzens, Rollens, Tauchens oder Streichens.

In den nachfolgenden Beispielen beziehen sich, wenn nichts anderes angegeben, alle Prozentangaben auf Gewichtsprozente und alle Angaben in "Teilen" auf Gewichtsteile. Der im Beispielteil verwendete Begriff "Prepolymer" soll auch "Semiprepolymere" umfassen.

## Beispiele

### 1. Herstellung der NCO-Prepolymere

1.1 Prepolymer aus Isophorondiisocyanat und einem $\alpha,\omega$-alkylhydroxyfunktionellen Polysiloxan mit 6 % OH

Zu vorgelegten 1102,5 Teilen Isophorondiisocyanat (37,84 % NCO) werden innerhalb einer Stunde 1400 Teile eines α,ω-Hydroxymethyl-polydimethylsiloxans des Molekulargewichts 560 entsprechend der obengenannten allgemeinen Formel bei 70 bis 80° C zugetropft. Nach Beendigung der Reaktion werden noch 2,63 Teile Benzoylchlorid zugegeben. Der Isocyanatgehalt beträgt ca. 8 %.

1.2 Prepolymer aus Isophorondiisocyanat und einem α,ω-alkylhydroxyfunktionellen Polysiloxan mit 3 % OH

Zu vorgelegten 137,8 Teilen Isophorondiisocyanat (37,84 % NCO) werden bei 70 bis 80° C 350 Teile eines α,ω-Hydroxymethyl-polydimethylsiloxans des Molekulargewichts 1135, entsprechend der oben angegebenen allgemeinen Formel zugetropft. Nach Beendigung der Reaktion werden noch 0,5 Teile Benzoylchlorid zugegeben. Der Isocyanatgehalt beträgt ca. 7,4 %.

1.3 Prepolymer aus Isophorondiisocyanat, Tris(isocyanatohexyl)-biuret und einem α,ω-alkylhydroxyfunktionellen Polysiloxan mit 6 % OH

111 Teile Isophorondiisocyanat (37,84 % NCO) und 190,9 Teile Tris(isocyanatohexyl)-biuret (23 % NCO) werden unter Rühren vorgelegt und bei einer Temperatur von 70 bis 80° C 300 Teile des Polysiloxans gemäß Beispiel 1.1 zugetropft. Nach Beendigung der Reaktion werden 0,5 Teile Benzoylchlorid zugegeben. Der Isocyanatgehalt liegt bei 6,1 %.

2. Herstellung von Lösungen der Prepolymeren und deren Anwendung

2.1 In einem Lösungsmittelgemisch aus Toluol, Methylethylketon und Aceton im Verhältnis 1:1:4 wird das gemäß 1.1 hergestellte Prepolymer 10 %ig gelöst.

2.2 Einer Lösung gemäß 2.1 wird zusätzlich als Katalysator 1 % Dibutylzinndilaurat und pro Mol Dibutylzinndilaurat 4 Mol Tosylisocyanat zugesetzt.

2.3 Ein Lösungsmittelgemisch aus 50 % des in Beispiel 2.1 verwendeten Gemisches aus Toluol, Methylethylketon und Aceton im Verhältnis 1:1:4 und 50 % Tetraethoxysilan wird hergestellt und darin das gemäß 1.1 hergestellte Prepolymer zu einer 10 %igen Lösung gelöst.

2.4 In Tetraethoxysilan als Lösungsmittel wird das gemäß 1.1 hergestellte Prepolymer zu einer 10 %igen Lösung gelöst.

2.5 Einer Lösung gemäß 2.3 wird zusätzlich als Katalysator 1 % Dibutylzinndilaurat pro Mol Dibutylzinndilaurat und 4 Mol Tosylisocyanat zugesetzt.

2.6 Die Prüfung der Lösung auf ihre Verwendbarkeit als Betonimprägniermittel erfolgte durch Auftragen der Lösungen mittels Einwegspritzen auf runde Prüfkörper aus Beton, die oberflächlich plan abgeschliffen waren.

Das Eindringen der Prepolymer-Lösungen wurde durch Zerschneiden der Prüflinge und Benetzen der Schnittfläche mit Wasser geprüft.

Bei den Lösungen 2.1 und 2.2 konnten Eindringtiefen von bis zu 5 mm festgestellt werden; die Lösungen 2.3, 2.4 und 2.5 erreichten Eindringtiefen von bis zu 10 mm.

3. Überprüfung der Wirksamkeit gegen Carbonatisation von Betonoberflächen

Gemäß der DIN 1164 wurden 4 x 4 x 16 cm große Probekörper aus Beton der Qualität B 25 PZ 35F hergestellt. Die herbei verwendete Betonmischung bestand aus 78,1 % Quarzsand mit einer Sieblinie gemäß DIN 1045, 14,6 % Portlandzement PZ 35F und 7,3 % Wasser. Die erhaltenen Probekörper wurden 28 Tage bei 20° C und 80 % relativer Luftfeuchtigkeit gelagert und dann durch offene Lagerung bei Raumtemperatur getrocknet.

Zur Imprägnierung der Probekörper wurde eine Lösung aus 15 % des in Beispiel 1.1 beschriebenen Prepolymeren und 85 % Cyclohexan hergestellt. 3 Probekörper wurden gewogen, 10 min. in die Imprägnierlösung getaucht und dann nochmals gewogen. Die Aufnahme an Imprägnierlösung betrug 26 $g/cm^2$ Betonoberfläche. Nach 60 min. offener Lagerung bei Raumtemperatur wurden die probekörper nochmals 10 min. in die Imprägnierlösung getaucht.

Die Aufnahme an Imprägnierlösung betrug 15 $g/m^2$ Betonoberfläche. Die gesamte Aufnahme an Imprägnierlösung war somit 41 $g/m^2$ Betonoberfläche. Die 3 imprägnierten Probekörper wurden 7 Tage bei 23° C und 70 % relativer Luftfeuchtigkeit gelagert.

Anschließend wurden die 3 imprägnierten Probekörper und 1 nicht imprägnierter Probekörper 4 Wochen lang in einer Luftatmosphäre mit 1 Vol-% $CO_2$ bei 20° C und 60 % relativer Luftfeuchtigkeit gelagert.

Zum Nachweis der Eindringtiefe von $CO_2$ in die Betonoberfläche und der nachfolgenden Carbonatisierung des Betons wurden die Probekörper durchgebrochen und der Querschnitt der Bruchstelle mit einer

pH-Indikatorlösung, die Phenolphthalein enthielt, besprüht.

Der darbonatisierte Bereich blieb farblos, während der ungeschädigte Beton rotviolett geforbt wurde.

Die 3 imprägnierten Probekörper wiesen eine mittlere Carbonatisierungstiefe von 2,7 mm auf, wogegen die mittlere Carbonatisierungstiefe beim nicht imprägnierten Probekörper 4,5 mm betrug.

## Patentansprüche

**1.** Verwendung von Imprägniermitteln, bestehend im wesentlichen aus

a) einem unter dem Einfluß von Luftfeuchtigkeit aushärtbaren NCO-Prepolymeren oder NCO-Semiprepolymeren mit einem NCO-Gehalt von 2 - 25 Gew.-%, auf Basis von

a1) organischen Polyisocyanaten

und

a2) Verbindungen mit mindestens zwei alkoholischen Hydroxylgruppen,

b) einem gegenüber Isocyanatgruppen inerten Lösungsmittel

und gegebenenfalls

c) Hilfs- und Zusatzmitteln,

wobei es sich bei den organischen Polyisocyanaten a1) um solche mit ausschließlich aliphatisch oder cycloaliphatisch gebundenen Isocyanatgruppen und bei den Polyhydroxylverbindungen a2) um mindestens zwei alkoholisch gebundene Hydroxylgruppen aufweisende Polysiloxane des Molekulargewichtsbereichs 300 - 5.000 handelt, zur Imprägnierung von mineralischen Substraten.

**2.** Verwendung gemaß Anspruch 1, dadurch gekennzeichnet, daß es sich bei der Komponente a2) um ein Hydroxyl-terminiertes Polysiloxan der Formel

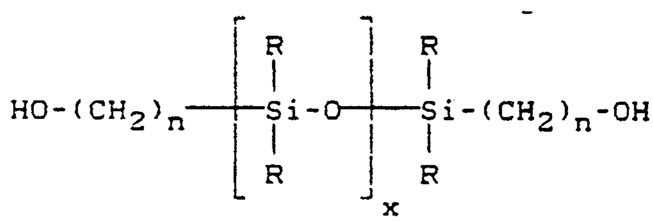

handelt, wobei

R für einen Alkylrest mit 1 - 6 Kohlenstoffatomen, vorzugsweise eine Methylgruppe steht,

n für eine ganze Zahl von 1 - 6, insbesondere 1 steht und

x für eine ganze Zahl von 4 - 50, vorzugsweise 5 - 20, steht.

**3.** Verwendung gemäß Anspruch 1 und 2 zur Imprägnierung von Beton.

**4.** Verwendung gemaß Anspruch 1 und 2 zur Imprägnierung von Naturstein.

## Claims

**1.** The use of impregnating agents consisting essentially of

a) an NCO prepolymer or NCO semi-prepolymer with an NCO content of 2 to 25% by weight which can be cured under the effect of atmospheric moisture and which is based on

a1) organic polyisocyanates

and

a2) compounds containing at least two alcoholic hydroxyl groups,

b) a solvent inert to isocyanate groups and, optionally,

c) auxiliaries and additives,

the organic polyisocyanates a1) being those containing only aliphatically or cycloaliphatically bound isocyanate groups and the polyhydroxyl compounds a2) being polysiloxanes containing at least two

alcoholically bound hydroxyl groups and having a molecular weight in the range from 300 to 5,000, for impregnating mineral substrates.

**2.** The use claimed in claim 1, characterized in that component a2) is a hydroxyl-terminated polysiloxane corresponding to the following formula

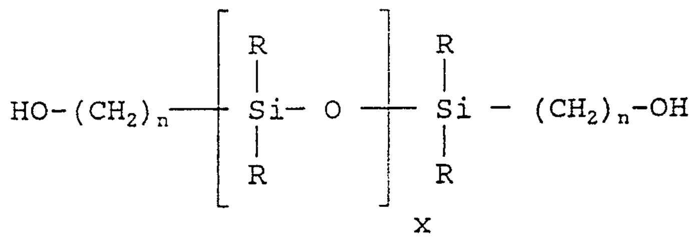

in which

R is a $C_{1-5}$ alkyl radical, preferably a methyl group,
n is an integer of 1 to 6, more particularly 1, and
x is an integer of 4 to 50 and preferably 5 to 20.

**3.** The use claimed in claims 1 and 2 for impregnating concrete.

**4.** The use claimed in claims 1 and 2 for impregnating natural stone.

**Revendications**

**1.** Utilisation d'agents d'imprégnation consistant essentiellement en:

a) un prépolymère NCO ou un semi-prépolymère NCO durcissable sous l'influence de l'humidité de l'air, avec une teneur en NCO de 2 à 25 % en poids, à base de:
a1) polyisocyanates organiques et
a2) des composés avec au moins deux groupes hydroxyles alcooliques;
b) un agent de solubilisation inerte vis-à-vis des groupes isocyanates, et le cas échéant
c) des adjuvants et additifs,

tandis que les polyisocyanates organiques a1) dont il s'agit sont des polyisocyanates avec des groupes isocyanate exclusivement liés à des composés aliphatiques ou cyclo-aliphatiques, les composés polyhydroxylés a2) étant des polysiloxanes présentant au moins deux groupes hydroxyle alcooliquement liés, et de poids moléculaire de l'ordre de 300 à 5.000,

en vue de l'imprégnation de substrats minéraux.

**2.** Utilisation selon la revendication 1, **caractérisée en ce que** les composés a2) dont il s'agit sont des polysiloxanes à terminaisons hydroxylées de formule

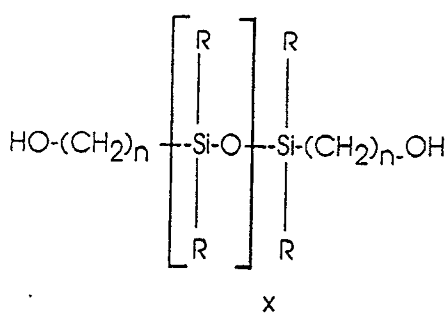

dans laquelle:

- R représente un radical alkyle avec 1 à 6 atomes de carbone, de préférence un groupe méthyle;
- n est un nombre entier de 1 à 6, en particulier 1; et
- x est un nombre entier de 4 à 50, de préférence de 5 à 20.

**3.** Utilisation selon les revendications 1 et 2 en vue de l'imprégnation des bétons.

**4.** Utilisation selon les revendications 1 et 2 en vue de l'imprégnation de pierres naturelles.